# EUROPÄISCHE PATENTSCHRIFT

(11) **EP 2 352 658 B1**
(45) Veröffentlichungstag und Bekanntmachung des Hinweises auf die Patenterteilung: **19.09.2012**
(21) Anmeldenummer: 09767974.0
(22) Anmeldetag: 03.12.2009
(51) Int. Cl.: B60J 10/02, B60J 10/04

(54) **SCHEIBENFASSUNG**
WINDSHIELD FRAME
ENCADREMENT DE VITRE

(30) Priorität: 04.12.2008 DE 102008060448
(43) Veröffentlichungstag der Anmeldung: 10.08.2011
(73) Patentinhaber: Cadea Gesellschaft Für Anwendung Und Realisierung Computerunterstützter Systeme Mbh, 82223 Eichenau (DE)
(72) Erfinder: ERTL, Harald, 82223 Eichenau (DE)
(74) Vertreter: Grünecker, Kinkeldey, Stockmair & Schwanhäusser
(86) Internationale Anmeldenummer: PCT/EP2009/008640
(87) Internationale Veröffentlichungsnummer: WO 2010/063477

(56) Entgegenhaltungen:
- EP-A- 0 431 964
- WO-A-00/73097
- JP-A- 2002 103 986
- US-A- 3 968 613
- US-A- 4 758 039

## Beschreibung

Die Erfindung betrifft eine Scheibeneinfassung für eine Scheibe eines Pkws mit mindestens einer Dichtung, die ein oder mehrere Dichtungsprofile umfasst, die in Längserstreckung der Dichtung an Stoßstellen aneinander stoßen, und mit einem mit der Dichtung zusammenwirkenden, separaten Befestigungsprofil, wobei das Befestigungsprofil ein oder mehrere Befestigungsprofilstücke umfasst, die in Längserstreckung des Befestigungsprofils an mindestens einer Stoßstelle aneinander stoßen, und wobei an den Befestigungsprofilstücken eine metallische Zierblende angebracht ist. Ferner betrifft die Erfindung auch ein Verfahren zum Herstellen der Scheibeneinfassung.

In der Automobilbranche sind solche Scheibeneinfassungen bereits seit langem bekannt. Über die Dichtungen der Scheibeneinfassungen wird der Innenraum des Pkws im Bereich der Ränder der Seitenscheiben nach außen abgedichtet, so dass kein Staub und keine Flüssigkeiten in den Pkw eindringen können. Zudem dienen die Scheibeneinfassungen zur Aufnahme von Windlasten und zur Geräuschreduzierung. Bei Fahrzeugen der Oberklasse ist es bekannt, diese Dichtungen bzw. die gesamte Scheibeneinfassung durch Zierblenden, beispielsweise verchromte Zierblenden, abzudecken, um ein optisch ansprechendes Äußeres des Fahrzeugs zu erhalten.

Die DE 43 14 123 A1 zeigt eine Tür für ein Kraftfahrzeug mit einem aus Rahmenteilen bestehenden Fensterrahmen für eine Fensterscheibe. Dem Fensterrahmen ist mindestens ein Dichtelement zugeordnet, das die Fensterscheibe zum Fensterrahmen hin und/oder den Fensterrahmen gegenüber umgebenden Fahrzeugteilen, wie dem Fahrzeugdach, abdichtet. Das Dichtelement ist dabei so ausgebildet, dass es eine Aufnahme aufweist, in die eine Zierblende eingesteckt ist. Dazu weist die Zierblende ein Befestigungselement auf, das in eine Aufnahme in der Dichtung aufgenommen ist. Die Zierblende verläuft benachbart zum oberen Rand des Fensterrahmens und ist somit nur an einer Seite der Fensterscheibe angeordnet. Daher weist die Zierblende keine größeren Biegungen auf. Da die Zierblende ein integriertes Befestigungselement aufweist, ist es schwierig, die gewünschte Oberflächenstruktur bzw. Oberflächengüte der Zierblende zu erzielen.

Ähnliche Dichtungsanordnungen bzw. Zierblenden sind aus der DE 10 2005 028 738 B3 und der DE 10 2006 021 190 A1 bekannt. Die DE 600 21 910 T2 zeigt ebenfalls ein Dichtungselement für eine Dichtungsanordnung einer Fahrzeugscheibe, in das eine im Querschnitt T-förmige Zierblende eingesteckt ist.

Auch die FR 2 912 348 zeigt eine Dichtungsanordnung für eine Fahrzeugscheibe. Auf ein Dichtprofil der Dichtungsanordnung kann eine Zierblende aufgeklipst werden. Ferner wird beschrieben, dass auf das Dichtprofil Klammern aufgesteckt werden, auf die die Zierblende aufgeklipst wird.

Es ist auch bekannt, dass auf jeder Seite des Fahrzeugs bzw. des Pkws die Scheibe bzw. die Scheiben der vorderen und hinteren Seitentür von einer Scheibeneinfassung umgeben sind, so dass die Scheibeneinfassung einen Rahmen um alle Seitenscheiben einer Fahrzeugseite bildet. Daher müssen sowohl das Befestigungsprofil als auch die Dichtungen um die Ecken der Seitenscheiben geführt werden. Eine Biegung des Befestigungsprofils ist allerdings schwierig, da dadurch die Elemente, mit denen das Befestigungsprofil an dem Fahrzeug befestigt wird, ebenfalls gebogen werden und dadurch Verformungen erleiden können, die den Einbau des Befestigungsprofils am Fahrzeug erschweren.

Daher ist es bekannt, das Befestigungsprofil zu stückeln, so dass an den Ecken der Scheiben einzelne Befestigungsprofilstücke an Stoßstellen aneinander liegen. Die an den Befestigungsprofilstücken angeordnete Zierblende ist ebenfalls gestückelt. Dadurch sind die Stoßstellen nach Außen offen, so dass Schmutz und Wasser in diese Stoßstellen eindringen kann. Zudem wird durch die gestückelte Zierblende ein unästhetischer optischer Eindruck hervorgerufen.

Es ist daher Aufgabe der vorliegenden Erfindung, eine Scheibeneinfassung bereitzustellen, die einen leichten Einbau ermöglicht, dennoch gute Dichtwirkung bietet und zu einem ansprechenden optischen Gesamteindruck des Fahrzeugs beiträgt.

Hierzu ist erfindungsgemäß vorgesehen, dass das oder die Befestigungsprofilstücke einen Blendenflansch sowie mindestens ein Befestigungselement zum Befestigen des Befestigungsprofils an dem Pkw aufweist und dass die Zierblende auf den Blendenflansch des oder der Befestigungsprofilstücke aufgebördelt ist, so dass sie einstückig die Stoßstelle überdeckt.

Der Begriff "Stoßstelle" bezeichnet in diesem Zusammenhang jede Art der Unterbrechung bzw. jede Art von Unstetigkeit in dem Befestigungsprofil. So ist es beispielsweise bekannt, zumindest in Teilbereichen des Befestigungsprofils Unterbrechungen bzw. Aussparungen zu fertigen, um eine Biegung des Befestigungsprofils zu ermöglichen. Auch hierbei handelt es sich gemäß obiger Definition um Stoßstellen.

Durch die Verwendung eines separaten Befestigungsprofils zur Befestigung der Zierblende an dem Pkw wird eine Trennung zwischen Funktionalität und Optik erzielt. Das Befestigungsprofil als funktionales Teil ermöglicht eine sehr gute Befestigung der Zierblende an der Fahrzeugtür. Da die Zierblende separat gefertigt und angebracht wird, müssen keine Abstriche bei der Optik gemacht werden. Vorzugsweise wird als Zierblende ein durchgehendes, tiefgezogenes oder geprägtes Teil eingesetzt. Dadurch kann die gewünschte Optik der Zierblende einfach erzielt werden. Der Begriff "einstückig" bedeutet hierbei, dass die Zierblende in Längsrichtung, d.h. in Richtung der Erstreckung der Ränder der Seitenscheibe keine Unterbrechung aufweist. Die Zierblende weist also auch keine Stoßstellen auf. Durch die metallische Zierblende werden die Stoßstellen der Befestigungsprofilstücke und/oder der Dichtungsprofile somit vor äußeren Einflüssen geschützt, das Eindringen von Schmutz und Flüssigkeiten in die Scheibeneinfassung wird vermieden. Da die Zierblende die Stoßstellen der Befestigungsprofilstücken der Scheibeneinfassung umgibt, wird ein ästhetischer Gesamteindruck des Fahrzeugs erzielt. Die Scheibeneinfassung erhält eine fugenlose Außenseite. Zudem kann die Zierblende eine beliebige Form aufweisen, da sie nicht fest mit dem Befestigungsprofil verbunden ist, sondern erst bei der Herstellung der Scheibeneinfassung an die Befestigungsprofilstücke und somit auch an die Dichtung bzw. die Dichtungen gekoppelt wird. Dadurch ist es auch möglich, die Scheibeneinfassung komplett getrennt von dem Fahrzeug herzustellen und die komplette Scheibeneinfassung kann einfach im Ganzen in das Fahrzeug eingesetzt werden, da die Befestigungsprofilstücke von der Zierblende zusammengehalten werden.

Zwar ist aus der GB 2 371 070 A eine einstückige Zierleiste für eine Scheibeneinfassung einer Fahrzeugtür bekannt, allerdings ist diese Zierleiste nicht auf Befestigungsprofilstücken, sondern direkt auf den Rahmen der Fahrzeugtür aufgebracht. Das Anbringen der Zierleiste an der Fahrzeugtür ist daher komplex und zeitintensiv. Nach dem Aufbringen der Zierleiste auf den Fahrzeugtürrahmen müssen dann noch die Dichtungen angebracht werden.

Eine günstige Ausgestaltung sieht vor, dass das Befestigungsprofil mindestens eine Hinterschneidung zum Einstecken einer Dichtung bzw. zum Aufstecken des Befestigungsprofils auf eine Dichtung aufweist. Je nach Montagerichtung ist es also möglich, die Scheibeneinfassung mit Dichtung komplett herzustellen und an dem Pkw zu befestigen oder aber die Dichtung an dem Pkw zu befestigen und dann das Befestigungsprofil mit der aufgebördelten Zierblende auf die Dichtungen einzusetzen. Dabei kann auch vorgesehen werden, dass die Dichtung mit Klemmen an dem Pkw befestigt wird und das Befestigungsprofil in die Klemmen eingesetzt wird bzw. an den Klemmen hinterrastet.

In einer bevorzugten Ausführungsform kann vorgesehen werden, dass das Befestigungsprofil aus einem extrudierbaren Material besteht und bevorzugt ein extrudiertes Metallprofil, vorzugsweise ein extrudiertes Aluminiumprofil, ist. Auf diese Weise ist es sehr einfach möglich, das Befestigungsprofil mit der gewünschten Funktionalität herzustellen. Bei einem extrudierten Profil können beispielsweise Hinterschneidungen sehr einfach hergestellt werden, die eine Befestigung des Befestigungsprofils an dem Pkw und die Befestigung von Dichtungen in dem Befestigungsprofil ermöglichen. Alle extrudierbaren Materialien, also z.B. Kunststoff, können für das Befestigungsprofil verwendet werden. Aus Festigkeitsgründen wird Metall, insbesondere Aluminium, bevorzugt.

In einer Variante kann vorgesehen werden, dass die Blendenflansche der Befestigungsprofilstücke in Längserstreckung der Befestigungsprofilstücke unterschiedliche Breite aufweisen. Durch die Breite der Blendenflansche der Befestigungsprofilstücke wird so die gewünschte Breite der Zierblende und somit die gewünschte Optik vorgegeben. Die Zierblende kann einfach auf die Blendenflansche aufgebördelt werden und muss nicht weiter gestaltet werden.

Eine bevorzugte Ausbildung sieht vor, dass die Zierblende durchgehend einteilig ausgebildet ist. Beispielsweise kann die Zierblende ein Ziehteil oder ein geprägtes Teil sein. Die Zierblende besteht also auch in ihrer Breite oder Dicke nicht aus mehreren Streifen. Die Zierblende weist daher eine nicht unterbrochene Außenfläche auf. Die Zierblende umfasst nur ein Bauteil, das die Befestigungsprofilstücke zusammenhält, so dass die Scheibeneinfassung als ein Rahmen in den Pkw eingesetzt werden kann. Somit sind die Stoßstellen der Befestigungsprofilstücke nicht sichtbar. Eine sehr einfache Ausgestaltung der Zierblende ist möglich, z.B. kann ein Blechstreifen eingesetzt werden.

Zweckmäßigerweise kann vorgesehen werden, dass die Befestigungsprofilstücke unterschiedlich ausgebildet sind. Somit können die Befestigungsprofilstücke durch unterschiedliche Ausführungen der Blendenflansche und/oder der Befestigungselemente an den Einbauort und die entsprechenden Anforderungen angepasst werden. So kann z.B. an der Unterseite einer Seitenscheibe, d.h. an der Brüstung der Fahrzeugtür, ein anderes Befestigungsprofil eingesetzt werden als bei der rechten oder linken Seite einer Seitenscheibe oder als bei einer feststehenden Scheibe. Es ist auch möglich, verschiedene Dichtprofile einzusetzen.

Eine weitere Variante sieht vor, dass das mindestens eine Befestigungselement der Befestigungsprofilstücke in die Dichtungsprofile eingesteckt ist und so das Befestigungsprofil an dem Pkw befestigt. Auf diese Weise wird eine Berührung des Befestigungsprofils, das vorzugsweise aus Metall ausgebildet ist, mit dem Rahmen einer Tür bzw. der Karosserie des Pkws vermieden, so dass keine Kontaktkorrosion oder andere Probleme auftreten.

Es kann aber auch vorgesehen werden, dass das mindestens eine Befestigungselement der Befestigungsprofilstücke auf einen Rahmen des Pkws aufgesteckt ist und so das Befestigungsprofil an dem Pkw befestigt. Dadurch wird eine sichere Verbindung der Befestigungsprofilstücke mit dem Rahmen bzw. der Karosserie des Pkws erreicht, die Dichtung bzw. die Dichtungsprofile können in die Befestigungsprofilstücke eingeklippst werden.

Eine weitere Ausbildung sieht vor, dass die Scheibeneinfassung eine bewegliche Seitenscheibe und eine feststehende Seitenscheibe umgibt. Somit können beide Scheiben von demselben Rahmen umgeben werden, es entsteht ein optisch ansprechender Gesamteindruck der Fahrzeugseite.

Ferner kann auch vorgesehen werden, dass die Scheibeneinfassung nur einen Teilbereich einer Scheibe umgibt. Auch in diesem Teilbereich überdeckt die Zierleiste die Stoßstellen zwischen den Befestigungsprofilstücken. Es wird eine Trennung zwischen Funktionalität (Befestigungsprofil) und Optik (Zierblende) erreicht. Beispielsweise kann die Zierblende nur eine feststehende Seitenscheibe umgeben. Dies ist z.B. bei Coupés vorteilhaft.

Darüber hinaus bezieht sich die Erfindung auch auf ein Verfahren zur Herstellung einer erfindungsgemäßen Scheibeneinfassung. Das Verfahren umfasst die folgenden Schritte:
- Bereitstellen mindestens eines Befestigungsprofilstücks mit einem Blendenflansch, wobei der Blendenflansch Überbreite aufweist,
- Bearbeiten des Blendenflansches des mindestens einen Befestigungsprofilstücks entlang seiner Breite auf die gewünschte Form des Blendenflansches und
- Aufbördeln der Zierblende auf den bearbeiteten Blendenflansch.

Somit ist es möglich, eine Scheibeneinfassung mit einer Zierblende bereitzustellen, die über ihre Länge unterschiedliche Breiten aufweist, wodurch die gewünschte Optik der Scheibeneinfassung erzielt wird. Durch die Trennung des funktionalen Teils, d.h. des Befestigungsprofilstücks, mit dem die Befestigung der Scheibeneinfassung an dem Pkw ermöglicht wird und des optischen Teils, d.h. der Zierblende, ist es möglich, eine Scheibeneinfassung herzustellen, die die gewünschte Optik bzw. die gewünschte Oberflächenstruktur aufweist und dennoch eine gute und einfache Befestigung für die Dichtung und an dem Pkw ermöglicht.

Vorzugsweise wird der Blendenflansch an seiner Breite befräst, so dass er über die Längserstreckung des Befestigungsprofilstücks unterschiedliche Breite aufweist. Durch das Fräsen ist eine sehr einfache Bearbeitung des Blendenflansches möglich.

In einer weiteren Variante des Verfahrens kann vorgesehen werden, dass mehrere Befestigungsprofilstücke bereitgestellt, die Blendenflansche der Befestigungsprofilstücke bearbeitet und die Zierblende auf die Blendenflansche aller Befestigungsprofilstücke aufgebördelt wird. Wie bereits beschrieben, erhält die Scheibeneinfassung dadurch eine fugenlose Außenseite. Die gewünschte Optik wird erzielt.

In noch einer weiteren Variante des Verfahrens kann vorgesehen sein, dass das mindestens eine Befestigungsprofilstück mindestens eine Hinterschneidung aufweist und mindestens ein Dichtungsprofil in die Hinterschneidung eingesetzt wird. Es wird eine besonders einfache Befestigung der Dichtung bzw. Dichtungsprofile an dem Befestigungsprofilstück ermöglicht.

Im Folgenden werden Ausführungsformen der Erfindung anhand einer Zeichnung näher erläutert. Es zeigen:
- Fig. 1: Seitenansicht eines Pkws mit zwei Fahrzeugtüren mit Scheibeneinfassung,
- Fig. 2: Schnittdarstellung der Scheibeneinfassung entlang Linie II-II aus Fig. 1,
- Fig. 3: Schnittdarstellung einer anderen Ausführungsform der Scheibeneinfassung entlang Linie III-III aus Fig. 1,
- Fig. 4: Schnittdarstellung der Scheibeneinfassung entlang Linie IV-IV aus Fig. 1,
- Fig. 5: Schnittdarstellung der Scheibeneinfassung entlang Linie V-V aus Fig. 1 und
- Fig. 6: Seitenansicht einer weiteren Ausführungsform einer Scheibeneinfassung.

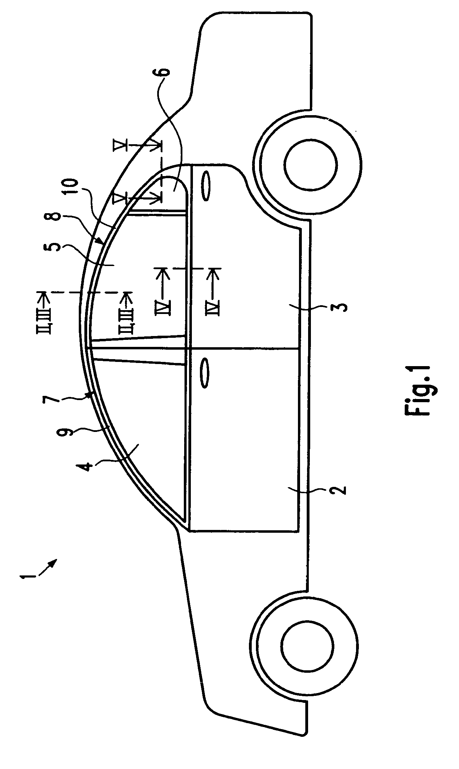

Fig. 1 zeigt eine Seitenansicht eines Pkws 1 mit einer vorderen Seitentür 2 und einer hinteren Seitentür 3. Sowohl in der vorderen Seitentür 2 als auch in der hinteren Seitentür 3 sind bewegliche Seitenscheiben 4, 5 angeordnet. In der hinteren Seitentür 3 kann ferner auch eine starre kleine Seitenscheibe 6 angeordnet sein. Die kleine starre Seitenscheibe 6 ist im hinteren Eckbereich der Seitenscheibenöffnung der hinteren Seitentür 3 angeordnet. Eine solche starre kleine Seitenscheibe kann auch in der vorderen Seitentür 2 angeordnet sein und befindet sich dann im vorderen Eckbereich der Seitenscheibe 4.

Sowohl an der vorderen Seitentür 2 als auch an der hinteren Seitentür 3 ist je eine Scheibeneinfassung 7, 8 angeordnet. Mittels der Scheibeneinfassung 7 der vorderen Seitentür 2 wird die bewegliche vordere Seitenscheibe 4 in der vorderen Seitentür 2 in Position gehalten. Die hintere Scheibeneinfassung 8 dient als Befestigung der hinteren starren Seitenscheibe 6 in der hinteren Seitentür 3 und dazu, die hintere bewegliche Seitenscheibe 5 in Position zu halten.

Die vordere Scheibeneinfassung 7 und die hintere Scheibeneinfassung 8 umgeben die Ränder der vorderen Seitenscheibe 4 und der hinteren Seitenscheiben 5, 6 bis auf den Bereich, an dem die vordere Seitentür 2 und die hintere Seitentür 3 benachbart zueinander sind. In diesem Bereich, d.h. in dem Bereich, in dem sich die vordere Seitentür 2 und die hintere Seitentür 3 berühren, stoßen die vordere Scheibeneinfassung 7 und die hintere Scheibeneinfassung 8 aneinander. Somit entsteht optisch der Eindruck eines geschlossenen Rahmens um die Seitenscheiben 4, 5, 6. Dieser Eindruck wird dadurch verstärkt, dass sowohl die vordere als auch die hintere Scheibeneinfassung 7, 8 eine umlaufende Zierblende 9, 10 aufweisen, die sich optisch von der Karosserie des Pkws 1 abhebt. Sowohl die Zierblende 9 als auch die Zierblende 10 weisen also keine Stoßstellen auf, stoßen aber, genau wie die vordere Scheibeneinfassung 7 und die hintere Scheibeneinfassung 8, in dem Bereich, in dem sich die vordere Seitentür 2 und die hintere Seitentür 3 berühren, aneinander. Die Zierblenden 9, 10 bestehen aus einem metallischen Werkstoff und sind vorzugsweise verchromt. Beispielsweise kann als Material für die Zierblenden 9, 10 Aluminium eingesetzt werden.

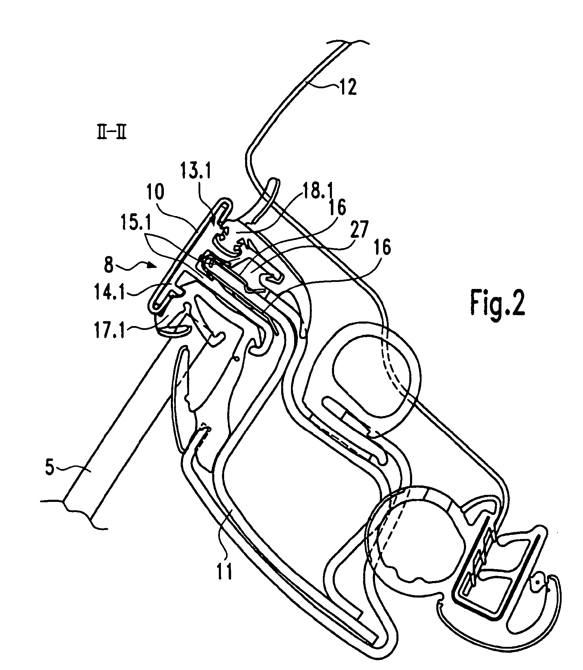

In Fig. 2 ist ein Schnitt durch die hintere Scheibeneinfassung 8 und die angrenzenden Bereiche entlang Linie II-II in Fig. 1 dargestellt. Die vordere Scheibeneinfassung 7 ist vorzugsweise identisch zur hinteren Scheibeneinfassung 8 aufgebaut sein. Die folgende Beschreibung kann daher auch auf die vordere Scheibeneinfassung 7 übertragen werden.

Die hintere Scheibeneinfassung 8 ist an dem Rahmen 11 der hinteren Seitentür 3 befestigt und bildet eine Aufnahme für die bewegliche hintere Seitenscheibe 5. Zudem bildet die Scheibeneinfassung 8 den Übergang von der hinteren Seitentür 3 zum Fahrzeugdach 12.

Die hintere Scheibeneinfassung 8 umfasst mindestens ein Befestigungsprofilstück 13.1, das einen Blendenflansch 14.1 für die Zierblende 10 und zwei Befestigungselemente 15.1 aufweist. Die Zierblende 10 wird an dem Blendenflansch 14.1 befestigt. Dies geschieht durch Aufbördeln.

Mittels der Befestigungselemente 15.1 ist das Befestigungsprofilstück 13.1 auf den Rahmen 11 der hinteren Seitentür 3 aufgesteckt. Die beiden Befestigungselemente 15.1 bilden einen im Wesentlichen u-förmigen Aufnahmeschacht 27, in den Klammern 16 eingesteckt sind. Die Klammern 16 sorgen für einen festen Halt des Befestigungsprofilstücks 13.1 auf dem Rahmen 11 der hinteren Seitentür 3.

In das Befestigungsprofilstück 13.1 sind ferner zwei Dichtungsprofile 17.1, 18.1 eingesteckt. Dazu weisen die Dichtungsprofile 17.1, 18.1 und das Befestigungsprofilstück 13.1 Vorsprünge und Vertiefungen auf, die ineinander greifen. Das Dichtungsprofil 17.1 dient als Aufnahme für die bewegliche Seitenscheibe 5 und weist entsprechende Dichtlippen an beiden Seiten sowie am oberen Ende der Seitenscheibe 5 auf. Das Dichtungsprofil 18.1 dichtet den Spalt zwischen der hinteren Seitentür 3 und dem Fahrzeugdach 12 ab und umfasst eine Dichtlippe, die an dem Fahrzeugdach 12 anliegt.

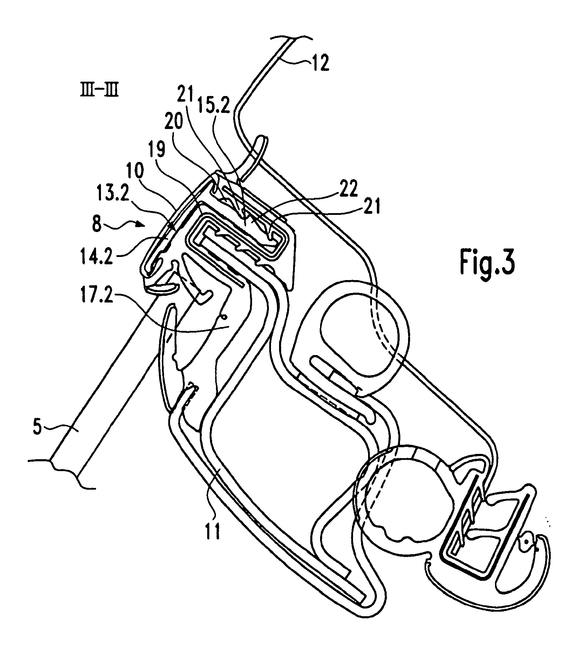

In Fig. 3 ist eine weitere Ausführungsform einer hinteren Scheibeneinfassung 8 im Schnitt entlang der Linie III-III in Fig. 1 dargestellt. Auch die Scheibeneinfassung 8 ist auf dem Rahmen 11 der hinteren Seitentür 3 befestigt, bildet eine Aufnahme und Dichtung für die bewegliche hintere Seitenscheibe 5 und dichtet die hintere Fahrzeugtür 3 gegen das Fahrzeugdach 12 ab.

Die Scheibeneinfassung 8 umfasst ein Dichtungsprofil 17.2, das auf den Rahmen 11 der hinteren Seitentür 3 aufgesteckt ist. Um einen sicheren Halt des Dichtungsprofils 17.2 auf dem Rahmen 11 zu ermöglichen, ist in dem Dichtungsprofil 17.2 eine Metallseele 19 angeordnet. Das Dichtungsprofil 17.2 bildet einerseits die Aufnahme und Abdichtung für die Fensterscheibe 5, dichtet aber auch die Fahrzeugtür 3 gegenüber dem Fahrzeugdach 12 ab. Das Dichtungsprofil 17.2 weist ferner eine Aufnahme 20 auf, in der das Befestigungsprofilstück 13.2 aufgenommen ist.

Das Befestigungsprofilstück 13.2 weist ebenfalls einen Blendenflansch 14.2 für die Zierblende 10 auf. Die Zierblende 10 wird also an dem Blendenflansch 14.2 des Befestigungsprofilstücks 13.2 angebracht. Vorzugsweise ist die Zierblende 10 auf den Blendenflansch 14.2 aufgebördelt. An dem Blendenflansch 14.2 ist ferner ein Befestigungselement 15.2 angebracht, das in die Aufnahme 20 des Dichtungsprofils 17.2 eingesteckt ist. Für einen sicheren Halt des Befestigungselements 15.2 in der Aufnahme 20 des Dichtungsprofils 17.2 weist das Dichtungsprofil 17.2 Vorsprünge 21 auf, die mit Widerhaken 22 des Befestigungselements 15.2 zusammenwirken und ein Herausrutschen des Befestigungsprofilstücks 13.2 aus dem Dichtungsprofil 17.2 verhindern.

Wie aus Fig. 1 ersichtlich, umschließen die vordere Scheibeneinfassung 7 und die hintere Scheibeneinfassung 8 die jeweilige vordere Scheibe 4 bzw. hintere Scheibe 5 an mindestens zwei Seiten. An dem Punkt, an dem die zwei Seiten der Scheibe zusammentreffen, weisen die vordere Scheibeneinfassung 7 und die hintere Scheibeneinfassung 8 daher einen Knick bzw. eine starke Biegung auf. Um Biegungen in dem Befestigungsprofil zu vermeiden, die zu Verformungen des Befestigungsprofils bzw. Befestigungselemente führen und den Einbau des Befestigungsprofils am Rahmen 11 der Fahrzeugtür erschweren würden, können die Befestigungsprofile gestückelt sein. Es ist auch möglich, im Bereich der Brüstung der Fahrzeugtür ein anderes Befestigungsprofilstück einzusetzen, als z.B. im Bereich der seitlichen Führung der Seitenscheibe, da die Befestigungsprofilstücke in diesen Bereichen unterschiedliche Funktionen erfüllen müssen. Die Zierblenden 9,10 überdecken solche Stoßstellen, an denen Befestigungsprofilstücke oder Dichtungsprofile aneinander stoßen.

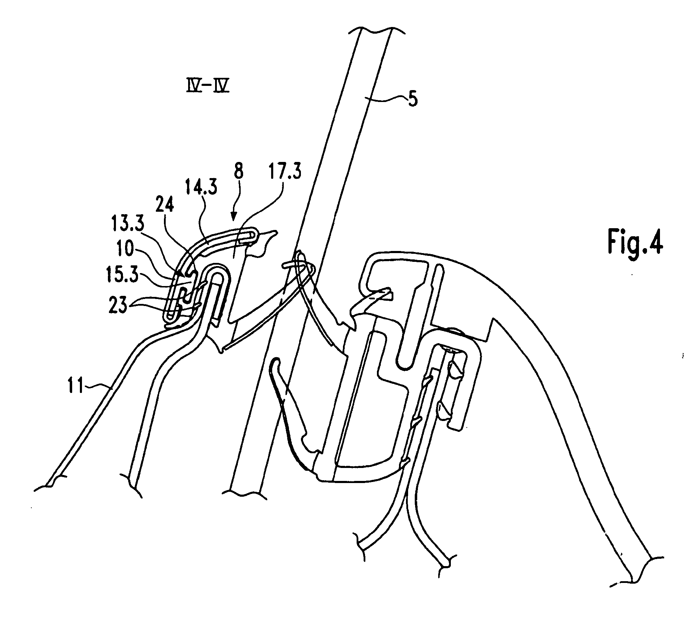

Fig. 4 zeigt einen Schnitt durch die Scheibeneinfassung 8 am unteren Rand der Fahrzeugscheibe 5 entlang der Linie IV-IV in Fig. 1.

Die Scheibeneinfassung 8 ist wiederum auf dem Rahmen 11 der hinteren Seitentür 3 befestigt und bildet eine Dichtung und Führung der beweglichen Seitenscheibe 5. In der Zeichnung ist auch ein Schnitt des Innenbereichs der Tür zu sehen.

Die Scheibeneinfassung 8 am unteren Rand der hinteren Seitenscheibe 5 des PKWs 1 umfasst wiederum ein Dichtungsprofil 17.3, ein Befestigungsprofilstück 13.3 und eine Zierblende 10. Das Dichtungsprofil 17.3 ist auf den Rahmen 11 der hinteren Seitentür 3 aufgeschoben und mit diesem verklemmt. Dazu kann das Dichtungsprofil 17.3 eine Metallseele (nicht dargestellt) aufweisen. Zudem sind an dem Dichtungsprofil 17.3 Vorsprünge 23 vorgesehen, die einen festen Halt am Rahmen 11 ermöglichen. Das Dichtungsprofil 17.3 weist wiederum eine Aufnahme 24 auf, in die das Befestigungselement 15.3 des Befestigungsprofilstücks 13.3 eingesteckt werden kann. Wahlweise können die Dichtungsprofile auch mit Klammern am Rahmen der Fahrzeugtür befestigt werden und die Befestigungsprofilstücke auf die Klammern aufgesteckt bzw. an den Klammern hinterrastet werden.

Je nach Montagerichtung ist es aber auch denkbar, die Dichtungen in das bzw. die Befestigungsprofilstück einzustecken und das Befestigungsprofilstück mittels des bzw. der Befestigungselemente direkt am Rahmen der Seitentür zu befestigen.

Das Befestigungsprofilstück 13.3 umfasst ferner einen Blendenflansch 14.3 für die Zierblende 10. Die Zierblende 10 ist vorzugsweise auf den Blendenflansch 14.3 aufgebördelt.

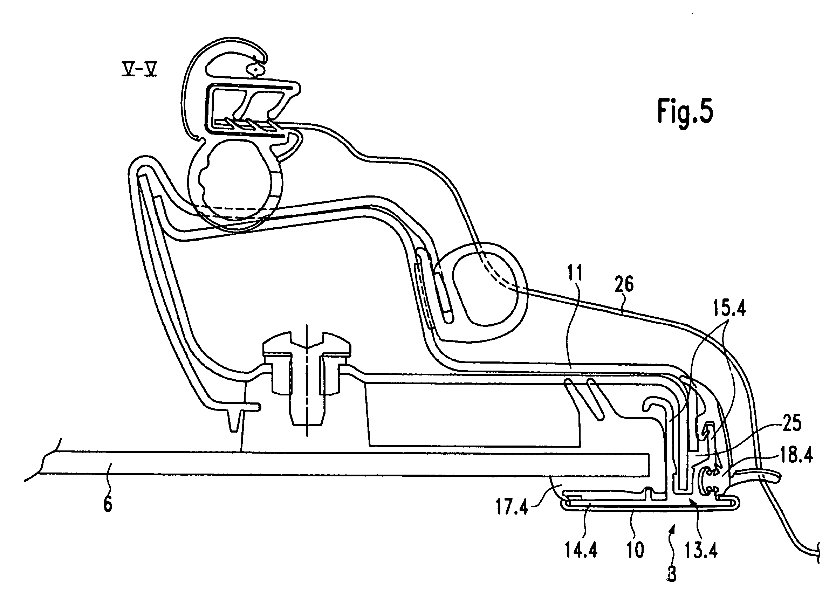

Wie bereits beschrieben, kann die hintere Verglasung des Pkws 1 zweiteilig sein und eine bewegliche Seitenscheibe 5 sowie eine kleine starre Seitenscheibe 6 umfassen. Auch die starre Seitenscheibe 6 ist dann von der Scheibeneinfassung 8 umschlossen. In Fig. 5 ist ein Schnitt durch die Scheibeneinfassung 8 im Bereich der starren hinteren Seitenscheibe 6 entlang der Linie V-V aus Fig. 1 dargestellt.

Die Scheibeneinfassung 8 umfasst auch in diesem Bereich ein Befestigungsprofilstück 13.4, Dichtungsprofile bzw. Fassungen 17.4, 18.4 sowie die Zierblende 10. Die Befestigungsprofilstücke sind vorzugsweise unterschiedlich ausgebildet, damit sie gut an den jeweiligen Einbauort angepasst werden können. Die Zierblende 10 überdeckt einsstückig alle Befestigungsprofilstücke und somit auch alle Stoßstellen.

Da im Bereich der starren hinteren Seitenscheibe 6 andere Anforderungen gestellt werden als im Bereich der beweglichen Seitenscheibe 5, kann auch hier wieder ein separates Befestigungsprofilstück 13.4 angebracht sein. Das Befestigungsprofilstück 13.4 umfasst ebenfalls einen Blendenflansch 14.4 für die Zierblende 10. Die Zierblende 10 ist vorzugsweise auf den Blendenflansch 14.4 aufgebördelt. An dem Blendenflansch 14.4 des Befestigungsprofilstücks 13.4 sind zwei Befestigungselemente 15.4 angeordnet, die einen Aufnahmeschacht 25 ausbilden, der auf den Rahmen 11 der hinteren Seitentür 3 aufgesteckt wird. Um einen sicheren Halt des Befestigungsprofilstücks 13.4 auf dem Rahmen 11 zu ermöglichen, kann ein Dichtungsprofil 18.4 in das Befestigungsprofilstück 13.4 eingesteckt werden und das Befestigungsprofilstück 13.4 mit dem Rahmen 11 verklemmen. Gleichzeitig dichtet das Dichtungsprofil 18.4 die hintere Seitentür 3 in diesem Bereich gegen die entsprechende Fahrzeugsäule 26, d.h. die C-Säule, ab.

Über eine weitere Umfassung oder separaten Fassung 17.4 wird die starre Seitenscheibe 6 mit dem Türrahmen 11 und dem Befestigungsprofilstück 13.4 verbunden. Alternativ ist es auch denkbar das Befestigungsstück 13.4 mittels Klammern an dem Rahmen zu befestigen oder die Dichtungen einstückig zu gestalten und das Befestigungsprofilstück in die Dichtung einzustecken und so am Rahmen der Seitentür zu befestigen.

Als Befestigungsprofil bzw. Befestigungsprofilstücke 13.1, 13.2, 13.3, 13.4 werden vorzugsweise Teile aus einem extrudierbaren Material, bevorzugt extrudierte Metallteile, besonders bevorzugt extrudierte Aluminiumteile eingesetzt. Zum Einsetzen der Dichtungen weisen das Befestigungsprofil bzw. die Befestigungsprofilstücke 13.1, 13.2, 13.3, 13.4 vorzugsweise Hinterschneidungen auf.

Im Gegensatz zu den Befestigungsprofilstücken 13.1, 13.2, 13.3, 13.4 sind die Zierblenden 9, 10 der vorderen Seitentür 2 und der hinteren Seitentür 3 nicht gestückelt sondern verlaufen einstückig über alle Befestigungsprofilstücke 13.1, 13.2, 13.3, 13,4 und überdecken somit alle Stoßstellen. Die Zierblende 9, 10 ist vorzugsweise an jeder Seitentür 2, 3 einteilig ausgeführt und kann aus einem Blechband bestehen. Es ist auch möglich, gezogene oder geprägte Teile als Zierblende zu verwenden.

Bei der Fertigung der Scheibeneinfassungen 7, 8 werden daher alle benötigten Befestigungsprofilstücke 13.1, 13.2, 13.3, 13,4 und alle benötigten Dichtungsprofile 17.1, 17.2, 17.3, 17.4, 18.1, 18.2 aneinander gesetzt und miteinander verbunden. Je nach Ausbildung der Befestigungsprofilstücke und der Dichtungsprofile werden dabei die Dichtungsprofile in die Befestigungsprofilstücke oder umgekehrt die Befestigungsprofilstücke in die Dichtungsprofile eingesetzt. Auf die Blendenflansche 14.1, 14.2, 14.3, 14.4 des so entstandenen gestückelten Rahmens werden wird die Zierblende 9, 10 aufgebördelt. Es ist auch möglich, nur ein Befestigungsprofilstück zu verwenden, dass die gesamte Länge der Scheibeneinfassung überstreckt und auf dessen Blendenflansch die Blende aufgebördelt wird. Der so entstehende komplette Rahmen bzw. die Scheibeneinfassung 7, 8 kann dann als komplett vorgefertigte Einheit einfach in die jeweilige Seitentür 2, 3 des Pkws 1 eingesetzt werden. Somit sind die Stoßstellen der Befestigungsprofilstücke 13.1, 13.2, 13.3, 13,4 durch die Zierblende 9, 10 nach außen abgedeckt und nicht sichtbar. Das Eindringen von Schmutz, Staub und Flüssigkeiten in die Scheibeneinfassung 7, 8 und somit eventuell in den Fahrzeuginnenraum wird vermieden. Zudem wird ein optisch ansprechendes Äußeres des Pkws 1 erzielt.

Wie aus den Figuren 1 bis 5 hervorgeht, kann der Blendenflansch 14.1, 14.2, 14.3, 14.4 der Befestigungsprofilstücke 13.1, 13.2, 13.3, 13,4 in Längserstreckung der Befestigungsprofilstücke 13.1, 13.2, 13.3, 13,4 verschiedene Breiten aufweisen. Dadurch ist eine Anpassung der Befestigungsprofilstücke 13.1, 13.2, 13.3, 13,4 an die unterschiedlichen Einbauorte möglich, beispielsweise können unterschiedliche Dichtungsprofile aufgenommen werden. Zudem kann dadurch die Optik der Scheibeneinfassung 7, 8 beeinflusst bzw. gestaltet werden. Vorzugsweise sind die Befestigungsprofilstücke 13.1, 13.2, 13.3, 13.4 aus einem metallischen Werkstoff, z.B. sind die Befestigungsprofilstücke extrudierte Aluminiumprofile. Auch bei der Verwendung von nur einem Befestigungsprofilstück wird vorzugsweise ein extrudiertes Aluminiumprofil eingesetzt.

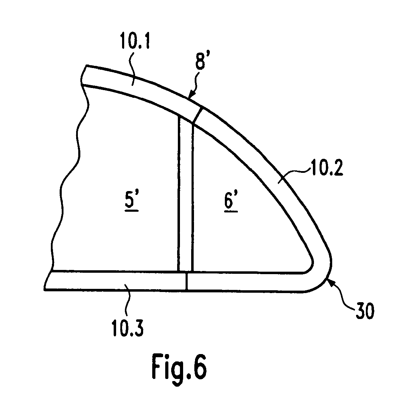

Fig. 6 zeigt eine weitere Ausführungsform einer Scheibeneinfassung 8'. Die Scheibeneinfassung 8' umgibt eine bewegliche Seitenscheibe 5' und eine starre Seitenscheibe 6'. Auch hier umfasst die Scheibeneinfassung 8' wieder Befestigungsprofilstücke (nicht dargestellt), die mit Dichtungsprofilstücken verbunden sein können. Die Befestigungsprofilstücke stoßen an Stoßstellen aneinander. Auf den Befestigungsprofilstücken sind Zierblenden 10.1, 10.2, 10.3 angebracht. Die Zierblende 10.2 umgibt die starre Seitenscheibe 6' an mindestens zwei Seiten und überdeckt mindestens zwei Befestigungsprofilstücke, die in der Ecke 30 der Seitenscheibe 6' an einer Stoßstelle aneinander stoßen. Die Zierblende 10.2 umgibt somit nur ein Teil der Seitenscheiben 5', 6' und überdeckt dabei mindestens eine Stoßstelle von Befestigungsprofilstücken. Ansonsten ist die Scheibeneinfassung wie oben beschrieben ausgebildet.

Es ist auch bekannt, gehärtete Befestigungsprofile bzw. Befestigungsprofilstücke zu verwenden. Die Befestigungsprofile bzw. Befestigungsprofilstücke können dann eine tragende Funktion übernehmen. Um dem Verlauf der Scheibe zu folgen, müssen die Befestigungsprofile zumindest teilweise gebogen werden. Dies ist bei den gehärteten Befestigungsprofilen nicht oder nur schwer möglich. Daher werden zumindest in Teilbereichen der Befestigungsprofile bzw. der Befestigungsprofilstücke Aussparung erzeugt, z.B. durch Fräsen. Auch bei diesen Aussparungen bzw. Unterbrechungen oder Unstetigkeiten in dem Befestigungsprofil handelt es sich um Stoßstellen.

Im Folgenden wird ein Verfahren zur Herstellung einer erfindungsgemäßen Scheibeneinfassung näher beschrieben. Bei der Herstellung der Scheibeneinfassung wird zunächst ein Befestigungsprofil bzw. mehrere Befestigungsprofilstücke 13.1, 13.2, 13.3, 13.4 bereitgestellt, die einen Blendenflansch 14.1, 14.2, 14.3, 14.4 aufweisen. Das Befestigungsprofil bzw. die Befestigungsprofilstücke 13.1, 13.2, 13.3, 13.4 werden vorzugsweise durch Extrudieren hergestellt, und weisen daher die Vorteile eines Extrudierteils auf. Beispielsweise können Hinterschneidungen vorgesehen werden, in die die Dichtungsprofile eingeklipst werden können. Der Blendenflansch des Befestigungsprofils bzw. der Befestigungsprofilstücke weist eine Überbreite auf, die mindestens so groß ist wie die maximal gewünschte Blendenflanschbreite. Die Blendenflansche werden nun bearbeitet, beispielsweise durch Fräsen, bis die gewünschte Form der Blendenflansche erzielt ist. So ist es beispielsweise möglich, dass die Blendenflansche über die Länge der Befestigungsprofile bzw. Befestigungsprofilstücke unterschiedliche Breiten aufweisen. Anschließend wird eine Zierblende bereitgestellt. Vorzugsweise wird als Zierblende ein geprägtes oder ein gezogenes Teil verwendet, das eine hochwertige Oberfläche aufweist. Die Zierblende wird dann auf den Blendenflansch des Befestigungsprofilstücks bzw. die Blendenflansche der aneinander gelegten Befestigungsprofilstücke aufgebördelt, so dass die Randbereiche der Zierblende den Blendenflansch an seinen Rändern umgeben. Dadurch ist die Darstellung jeglicher Form der Scheibenumfassung 7, 8 möglich.

Anschließend können in die Hinterschneidungen in den Befestigungsprofilen bzw. dem Befestigungsprofilstücken Dichtungsprofile eingesetzt werden und die komplette Scheibeneinfassung so in den Rahmen einer Fahrzeugtür eingesetzt werden.

Je nach Montagerichtung ist es aber auch möglich, die Dichtungen bzw. Dichtungsprofile auf den Rahmen der Fahrzeugtür aufzustecken und die Befestigungsprofile mit den darauf aufgebrachten Zierblenden auf die Dichtungen aufzustecken. Hierbei kann es vorgesehen werden, die Dichtungen mit Klammern an dem Fahrzeugrahmen zu befestigen und das Befestigungsprofil mit den darauf aufgebrachten Zierblenden an den Klammern zu hinterrasten.

Auch die Zierblende gemäß der zweiten Ausführungsform (Fig. 6) wird wie oben beschrieben hergestellt.

## Patentansprüche

1. Scheibeneinfassung (7,8; 8') für eine Scheibe (4, 5, 6; 5', 6') eines Pkws mit mindestens einer Dichtung, die ein oder mehrere Dichtungsprofile (17.1, 17.2, 17.3, 17.4, 18.1, 18.4) umfasst, die in Längserstreckung der Dichtung an Stoßstellen aneinander stoßen und mit einem mit der Dichtung zusammenwirkenden, separaten Befestigungsprofil, welches ein oder mehrere Befestigungsprofilstücke (13.1, 13.2, 13.3, 13.4) umfasst, die in Längserstreckung des Befestigungsprofils an mindestens einer Stoßstelle aneinander stoßen, **dadurch gekennzeichnet dass** an den Befestigungsprofilstücken (13.1, 13.2, 13.3, 13.4) eine metallische Zierblende (9, 10; 10.1, 10.2, 10.3) angebracht ist, wobei das oder die Befestigungsprofilstücke (13.1, 13.2, 13.3, 13.4) einen Blendenflansch (14.1, 14.2, 14.3, 14.4) sowie mindestens ein Befestigungselement (15.1, 15.2, 15.3, 15.4) zum Befestigen des Befestigungsprofils an dem Pkw aufweisen und dass die Zierblende (9, 10) auf den Blendenflansch (14.1, 14.2, 14.3, 14.4) des oder der Befestigungsprofilstücke (13.1, 13.2, 13.3, 13.4) aufgebördelt ist, so dass sie einstückig die Stoßstelle überdeckt.

2. Scheibeneinfassung (7, 8; 8') nach Anspruch 1, **dadurch gekennzeichnet, dass** das Befestigungsprofil mindestens eine Hinterschneidung zum Einstecken der Dichtung bzw. zum Aufstecken auf die Dichtung aufweist.

3. Scheibeneinfassung (7, 8; 8') nach Anspruch 1 oder 2, **dadurch gekennzeichnet, dass** das Befestigungsprofil aus einem extrudierbaren Material besteht und bevorzugt ein extrudiertes Metallprofil, vorzugsweise ein extrudiertes Aluminiumprofil, ist.

4. Scheibeneinfassung (7, 8) nach einem der Ansprüche 1 bis 3, **dadurch gekennzeichnet, dass** die Blendenflansche (14.1, 14.2, 14.3, 14.4) der Befestigungsprofilstücke (13.1, 13.2, 13.3, 13.4) in Längserstreckung der Befestigungsprofilstücke (13.1, 13.2, 13.3, 13.4) unterschiedliche Breite aufweisen.

5. Scheibeneinfassung (7, 8) nach einem der Ansprüche 1 bis 4, **dadurch gekennzeichnet, dass** die Zierblende (9, 10) einteilig ausgebildet ist.

6. Scheibeneinfassung (7, 8) nach einem der Ansprüche 1 bis 5, **dadurch gekennzeichnet, dass** die Befestigungsprofilstücke (13.1, 13.2, 13.3, 13.4) unterschiedlich ausgebildet sind.

7. Scheibeneinfassung (7, 8) nach einem der Ansprüche 1 bis 6, **dadurch gekennzeichnet, dass** das mindestens eine Befestigungselement (15.2, 15.3) der Befestigungsprofilstücke (13.2, 13.3) in die Dichtungsprofile (17.2, 17.3) eingesteckt ist und so das Befestigungsprofil an dem Pkw befestigt.

8. Scheibeneinfassung (7, 8) nach einem der Ansprüche 1 bis 6, **dadurch gekennzeichnet, dass** das mindestens eine Befestigungselement (15.1, 15.4) der Befestigungsprofilstücke (13.1, 13.4) auf einen Rahmen (11) des Pkws aufgesteckt ist und so das Befestigungsprofil an dem Pkw befestigt.

9. Scheibeneinfassung (7, 8) nach einem der Ansprüche 1 bis 8, dadurch gekennzeichnen, dass die Scheibeneinfassung (7, 8) eine bewegliche Seitenscheibe (4, 5) und eine feststehende Seitenscheibe (6) umgibt.

10. Scheibeneinfassung (8') nach einem der Ansprüche 1 bis 8, **dadurch gekennzeichnet dass** die Scheibeneinfassung (8') nur einen Teilbereich einer Scheibe (5', 6') umgibt.

11. Verfahren zum Herstellen einer Scheibeneinfassung (7, 8, 8') nach einem der Ansprüche 1 bis 10, **gekennzeichnet durch** die folgenden Schritte:
- Bereitstellen mindestens eines Befestigungsprofilstücks (13.1, 13.2, 13.3, 13.4) mit einem Blendenflansch (14.1, 14.2, 14.3, 14.4), wobei der Blendenflansch (14.1, 14.2, 14.3, 14.4) Überbreite aufweist,
- Bearbeiten des Blendenflansches (14.1, 14.2, 14.3, 14.4) des mindestens einen Befestigungsprofilstücks (13.1, 13.2, 13.3, 13.4) entlang seiner Breite auf die gewünschte Form des Blendenflansches (14.1, 14.2, 14.3, 14.4) und
- Aufbördeln der Zierblende (9, 10; 10.1, 10.2, 10.3) auf den bearbeiteten Blendenflansch (14.1, 14.2, 14.3, 14.4).

12. Verfahren nach Anspruch 11, **dadurch gekennzeichnet, dass** der Blendenflansch (14.1, 14.2, 14.3, 14.4) des mindestens einen Befestigungsprofilstücks (13.1, 13.2, 13.3, 13.4) an seiner Breite befräst wird, so dass der Blendenflansch (14.1, 14.2, 14.3, 14.4) über die Längserstreckung des Befestigungsprofilstücks (13.1, 13.2, 13.3, 13.4) unterschiedliche Breite aufweist.

13. Verfahren nach einem der Ansprüche 11 oder 12, **dadurch gekennzeichnet, dass** mehrere Befestigungsprofilstücke (13.1, 13.2, 13.3, 13.4) bereitgestellt, die Blendenflansche (14.1, 14.2, 14.3, 14.4) der Befestigungsprofilstücke (13.1, 13.2, 13.3, 13.4) bearbeitet und die Zierblende (9, 10) auf die Blendenflansche (13.1, 13.2, 13.3, 13.4) aller Befestigungsprofilstücke (13.1, 13.2, 13.3, 13.4) aufgebördelt wird.

14. Verfahren nach einem der Ansprüche 11 bis 13, **dadurch gekennzeichnet, dass** das mindestens eine Befestigungsprofilstück (13.1, 13.2, 13.3, 13.4) mindestens eine Hinterschneidung aufweist und mindestens ein Dichtungsprofil (17.1, 17.2, 17.3, 17.4) in die Hinterschneidung eingesetzt wird.

## Claims

1. A window frame (7, 8; 8') for a window (4, 5, 6; 5', 6') of a passenger car, comprising at least one seal having one or a plurality of sealing profiles (17.1, 17.2, 17.3, 17.4, 18.1, 18.4) that abut another at seams in the longitudinal direction of the seal, and further comprising a separate fastening profile cooperating with the seal and comprising one or a plurality of fastening profile pieces (13.1, 13.2, 13.3, 13.4) that abut one another on at least one seam in the longitudinal direction of the fastening profile, **characterized in that** the fastening profile pieces (13.1, 13.2, 13.3, 13.4) have attached thereto a metal ornamental moulding (9, 10; 10.1, 10.2, 10.3), the fastening profile piece or pieces (13.1, 13.2, 13.3, 13.4) is/are provided with a moulding flange (14.1, 14.2, 14.3, 14.4) and with at least one fastening element (15.1, 15.2, 15.3, 15.4) for fastening the fastening profile to the passenger car, and that the ornamental moulding (9, 10) is crimped on the moulding flange (14.1, 14.2, 14.3, 14.4) of the fastening profile piece or pieces (13.1, 13.2, 13.3, 13.4) such that it covers the seam in one piece.

2. A window frame (7, 8; 8') according to claim 1, **characterized in that** the fastening profile is provided with at least one undercut for inserting the seal or for attachment to the seal.

3. A window frame (7, 8; 8') according to claim 1 or 2, **characterized in that** the fastening profile consists of an extrudable material, and that it is preferably an extruded metal profile, preferably an extruded aluminum profile.

4. A window frame (7, 8) according to one of the claims 1 to 3, **characterized in that** the moulding flanges (14.1, 14.2, 14.3, 14.4) of the fastening profile pieces (13.1, 13.2, 13.3, 13.4) have different widths in the longitudinal direction of the fastening profile pieces (13.1, 13.2, 13.3, 13.4).

5. A window frame (7, 8) according to one of the claims 1 to 4, **characterized in that** the ornamental moulding (9, 10) is configured as an integral component.

6. A window frame (7, 8) according to one of the claims 1 to 5, **characterized in that** the fastening profile pieces (13.1, 13.2, 13.3, 13.4) have different configurations.

7. A window frame (7, 8) according to one of the claims 1 to 6, **characterized in that** the at least one fastening element (15.2, 15.3) of the fastening profile pieces (13.2, 13.3) is inserted in the sealing profiles (17.2, 17.3) and that the fastening profile is fixed to the passenger car in this way.

8. A window frame (7, 8) according to one of the claims 1 to 6, **characterized in that** the at least one fastening element (15.1, 15.4) of the fastening profile pieces (13.1, 13.4) is attached to a frame (11) of the passenger car and that the fastening profile is fixed to the passenger car in this way.

9. A window frame (7, 8) according to one of the claims 1 to 8, **characterized in that** the window frame (7, 8) encloses a movable side window (4, 5) and a fixed side window (6).

10. A window frame (8') according to one of the claims 1 to 8, **characterized in that** the window frame (8') encloses only a subarea of a window (5', 6').

11. A method of producing a window frame (7, 8; 8') according to one of the claims 1 to 10, **characterized by** the following steps:
- providing at least one fastening profile piece (13.1, 13.2, 13.3, 13.4) provided with a moulding flange (14.1, 14.2, 14.3, 14.4), said moulding flange (14.1, 14.2, 14.3, 14.4) having an excess width,
- processing the moulding flange (14.1, 14.2, 14.3, 14.4) of the at least one fastening profile piece (13.1, 13.2, 13.3, 13.4) along its width such that the desired shape of the moulding flange (14.1, 14.2, 14.3, 14.4) is obtained, and
- crimping the ornamental moulding (9, 10; 10.1, 10.2, 10.3) onto the processed moulding flange (14.1, 14.2, 14.3, 14.4).

12. A method according to claim 11, **characterized in that** the width of the moulding flange (14.1, 14.2, 14.3, 14.4) of the at least one fastening profile piece (13.1, 13.2, 13.3, 13.4) is subjected to cutting so that the moulding flange (14.1, 14.2, 14.3, 14.4) will have different widths in the longitudinal direction of the fastening profile piece (13.1, 13.2, 13.3, 13.4).

13. A method according to one of the claims 11 or 12, **characterized in that** a plurality of fastening profile pieces (13.1, 13.2, 13.3, 13.4) is provided, that the moulding flanges (14.1, 14.2, 14.3, 14.4) of the fastening profile pieces (13.1, 13.2, 13.3, 13.4) are processed and that the ornamental moulding (9, 10) is crimped onto the moulding flanges (13.1, 13.2, 13.3, 13.4) of all the fastening profile pieces (13.1, 13.2, 13.3, 13.4).

14. A method according to one of the claims 11 to 13, **characterized in that** the at least one fastening profile piece (13.1, 13.2, 13.3, 13.4) has at least one undercut, and that at least one sealing profile (17.1, 17.2, 17.3, 17.4) is installed in said undercut.

## Revendications

1. Encadrement de vitre (7, 8 ; 8') pour une vitre (4, 5, 6 ; 5', 6') d'une voiture particulière, avec au moins un joint d'étanchéité qui comprend un ou plusieurs profilés d'étanchéité (17.1, 17.2, 17.3, 17.4, 18.1, 18.4) mis bout à bout dans le sens longitudinal du joint au niveau de jonctions, et avec un profilé de fixation séparé qui coopère avec le joint d'étanchéité et qui comprend une ou plusieurs pièces de fixation profilées (13.1, 13.2, 13.3, 13.4) mises bout à bout dans le sens longitudinal du profilé de fixation au niveau d'au moins une jonction,
**caractérisé en ce qu'**une bordure décorative métallique (9, 10 ; 10.1, 10.2, 10.3) est montée sur les pièces de fixation profilées (13.1, 13.2, 13.3, 13.4), étant précisé que la ou les pièces de fixation profilées (13.1, 13.2, 13.3, 13.4) comportent une bride d'obturation (14.1, 14.2, 14.3, 14.4) ainsi qu'au moins un élément de fixation (15.1, 15.2, 15.3, 15.4) pour fixer le profilé de fixation à la voiture particulière, et **en ce que** la bordure décorative (9, 10) est repliée sur la bride d'obturation (14.1, 14.2, 14.3, 14.4) de la ou des pièces de fixation profilée (13.1, 13.2, 13.3, 13.4), de sorte qu'elle couvre d'une seule pièce la jonction.

2. Encadrement de vitre (7, 8 ; 8') selon la revendication 1, **caractérisé en ce que** le profilé de fixation comporte au moins une contre-dépouille pour l'introduction du joint d'étanchéité ou pour emboîter sur le joint d'étanchéité.

3. Encadrement de vitre (7, 8 ; 8') selon la revendication 1 ou 2, **caractérisé en ce que** le profilé de fixation se compose d'un matériau apte à être extrudé et est constitué de préférence par un profilé en métal extrudé, de préférence un profilé en aluminium extrudé.

4. Encadrement de vitre (7, 8) selon l'une des revendications 1 à 3, **caractérisé en ce que** les brides d'obturation (14.1, 14.2, 14.3, 14.4) des pièces de fixation profilées (13.1, 13.2, 13.3, 13.4) présentent des largeurs différentes dans le sens longitudinal desdites pièces de fixation profilées (13.1, 13.2, 13.3, 13.4).

5. Encadrement de vitre (7, 8) selon l'une des revendications 1 à 4, **caractérisé en ce que** la bordure décorative (9, 10) est formée d'une seule pièce.

6. Encadrement de vitre (7, 8) selon l'une des revendications 1 à 5, **caractérisé en ce que** les pièces de fixation profilées (13.1, 13.2, 13.3, 13.4) ont des formes différentes.

7. Encadrement de vitre (7, 8) selon l'une des revendications 1 à 6, **caractérisé en ce que** ledit élément de fixation (15.2, 15.3) des pièces de fixation profilées (13.2, 13.3) est introduit dans les profilés d'étanchéité (17.1, 17.3), et le profilé de fixation est ainsi fixé à la voiture particulière.

8. Encadrement de vitre (7, 8) selon l'une des revendications 1 à 6, **caractérisé en ce que** ledit élément de fixation (15.1, 15.4) des pièces de fixation profilées (13.1, 13.4) est emboîté sur un châssis (11) de la voiture particulière, et le profilé de fixation est ainsi fixé à la voiture particulière.

9. Encadrement de vitre (7, 8) selon l'une des revendications 1 à 8, **caractérisé en ce que** l'encadrement de vitre (7, 8) entoure une vitre latérale mobile (4, 5) et une vitre latérale fixe (6).

10. Encadrement de vitre (8') selon l'une des revendications 1 à 8, **caractérisé en ce que** l'encadrement de vitre (8') entoure seulement une zone partielle d'une vitre (5', 6').

11. Procédé pour fabriquer un encadrement de vitre (7, 8 ; 8') selon l'une des revendications 1 à 10, **caractérisé par** les étapes qui consistent :
- à préparer au moins une pièce de fixation profilée (13.1, 13.2, 13.3, 13.4) avec une bride d'obturation (14.1, 14.2, 14.3, 14.4), la bride d'obturation (14.1, 14.2, 14.3, 14.4) présentant une surlargeur,
- à usiner la bride d'obturation (14.1, 14.2, 14.3, 14.4) de ladite pièce de fixation profilée (13.1, 13.2, 13.3, 13.4) le long de sa largeur, pour obtenir la forme souhaitée de la bride d'obturation (14.1, 14.2, 14.3, 14.4), et
- à replier la bordure décorative (9, 10 ; 10.1, 10.2, 10.3) sur la bride d'obturation (14.1, 14.2, 14.3, 14.4) usinée.

12. Procédé selon la revendication 11, **caractérisé en ce que** la bride d'obturation (14.1, 14.2, 14.3, 14.4) de ladite pièce de fixation profilée (13.1, 13.2, 13.3, 13.4) est fraisée sur sa largeur, de sorte que ladite bride d'obturation (14.1, 14.2, 14.3, 14.4) présente des largeurs différentes sur l'extension longitudinale de la pièce de fixation profilée (13.1, 13.2, 13.3, 13.4).

13. Procédé selon l'une des revendications 11 ou 12, **caractérisé en ce que** plusieurs pièces de fixation profilées (13.1, 13.2, 13.3, 13.4) sont préparées, les brides d'obturation (14.1, 14.2, 14.3, 14.4) des pièces de fixation profilées (13.1, 13.2, 13.3, 13.4) sont usinées, et la bordure décorative (9, 10) est repliée sur les brides d'obturation (13.1, 13.2, 13.3, 13.4) de toutes les pièces de fixation profilées (13.1, 13.2, 13.3, 13.4).

14. Procédé selon l'une des revendications 11 à 13, **caractérisé en ce que** ladite pièce de fixation profilée (13.1, 13.2, 13.3, 13.4) présente au moins une contre-dépouille, et au moins un profilé d'étanchéité (17.1, 17.2, 17.3, 17.4) est introduit dans la contre-dépouille.
